# DEMANDE DE BREVET EUROPEEN

(11) **EP 2 813 375 A1**
(43) Date de publication de la demande: **17.12.2014**
(21) Numéro de dépôt: 13305787.7
(22) Date de dépôt: 11.06.2013
(51) Int. Cl.: B44C 1/14, B41M 3/00

(54) **Procédé et système de préparation de substrat avant dorure**

(71) Demandeur: MGI FRANCE, 94200 Ivry sur Seine (FR)
(72) Inventeur: Abergel, Edmond, 75012 Paris (FR)
(74) Mandataire: Debay, Yves

(57) **Abrégé**

La présente invention concerne un procédé et/ou un système de personnalisation de substrat et/ou de préparation de substrat avant dorure. En particulier, la présente invention consiste en un procédé d'impression comprenant une étape d'impression de substrat par jet d'encre suivie d'une étape de dorure par contact entre les zones du substrat à dorer et la feuille de dorure caractérisée par une étape additionnelle qui est préalable à l'étape de dorure et qui consiste en une préparation du substrat.

## Description

### DOMAINE TECHNIQUE

La présente invention concerne le domaine des dispositifs de personnalisation de substrats. Ainsi, l'invention concerne notamment un procédé et/ou un système de préparation de substrat avant le dépôt d'un revêtement (ou matière) additionnel, généralement appelé « dorure », et/ou concerne un procédé et/ou un système de « dorure » d'un substrat. En particulier, la présente invention concerne notamment un procédé d'impression comprenant une étape d'impression de substrat par jet d'encre suivie d'une étape de « dorure » par contact entre les zones du substrat à dorer et un dispositif de dépôt de « dorure », tel qu'une feuille de dorure par exemple, dans lequel l'étape de dorure est précédée d'une préparation du substrat.

Les techniques de dorure de substrat imprimé sont bien connues de l'homme du métier. Le principe de base de cette technique repose sur le fait de déposer un revêtement additionnel (i.e., dorure ou matière) sur le substrat, par un dispositif de dépôt de « dorure », par exemple en appliquant/pressant une feuille (portant ledit revêtement ou dorure) sur des zones sélectionnées du substrat de manière à faire adhérer aux zones sélectionnées la partie désirée de la feuille. Cette technique peut par exemple comporter un dépôt d'adhésif sur le substrat selon un motif prédéterminé avant le dépôt du revêtement de personnalisation (par exemple la feuille de dorure) sur l'adhésif déposé sur le substrat. Le dépôt de l'adhésif peut se faire au moyen d'une ou plusieurs techniques, comme par exemple l'impression par jet d'encre, l'impression à base de toner, la sérigraphie ou l'impression offset.

La présente invention se rapporte en particulier aux techniques d'impression par jet d'encre en relief, par exemple à l'aide de têtes d'impression piézo-électriques, adaptées en fonction de l'encre et/ou vernis d'impression utilisé.

### ART ANTERIEUR

Il est connu de l'art antérieur diverses solutions de personnalisation de substrat par dorure et notamment la demande WO2011110956, dans son mode de réalisation représenté par sa figure 2, décrit un système de dorure à froid comprenant un système de pressage 200 et, en amont de ce système de pressage, une section d'impression comprenant un dispositif d'impression 210 (par exemple, une imprimante à jet d'encre) pour déposer un motif de dépôt constitué d'une couche de colle 222, sur un substrat 220. Après le pressage d'une feuille sur le substrat, l'adhésif est durci et devient collant, ce qui permet à la feuille d'adhérer au motif préétabli.

### PROBLEME

Malgré l'évolution et la précision des techniques de dorure, la Demanderesse a découvert un problème lié à l'application de ces techniques en aval des techniques d'impression par jet d'encre en relief. En effet, lorsque les zones du substrat imprimées en relief sont recouvertes d'un revêtement tel qu'une dorure, il arrive fréquemment que les autres zones du dit substrat (i.e., celles qui n'étaient pas destinées à recevoir ledit revêtement) soient contaminées par la dorure.

### SOLUTION /INVENTION

La présente invention vise donc au moins à pallier à cet inconvénient majeur en proposant un procédé et/ou un système d'impression comprenant une impression de substrat par jet d'encre ou de personnalisation de substrats imprimés, notamment par jet d'encre, comportant au moins un dépôt de dorure, permettant de limiter (ou supprimer) les risques de débordement de la dorure sur les zones qui n'étaient pas destinées à recevoir cette dorure. Dans cette optique, certains modes de réalisation de l'invention concernent une préparation de substrat en vue d'une personnalisation par dorure.

Ce but est atteint par un procédé de préparation de substrat et/ou un procédé de personnalisation de substrat imprimé, comprenant au moins une impression d'au moins un substrat, généralement par jet d'encre, qui met en relief des zones destinées à être recouvertes d'une dorure et une préparation du substrat, le procédé étant **caractérisé en ce qu'il** comporte une addition de matière sur le substrat, de préférence à proximité des bords latéraux du substrat, préalablement à l'application de la dorure, de manière à guider un dispositif de dorure déposant ladite matière sans contaminer le reste dudit substrat.

L'épaisseur minimale de la matière ajoutée à proximité des bords latéraux du substrat est généralement de l'ordre du micron, de préférence supérieure à dix microns, ou même supérieure à quinze microns.

Selon une autre particularité, l'épaisseur de la matière ajoutée à proximité des bords latéraux du substrat est calculée en fonction de la valeur de l'épaisseur du relief des zones destinées à être recouvertes d'une feuille de dorure.

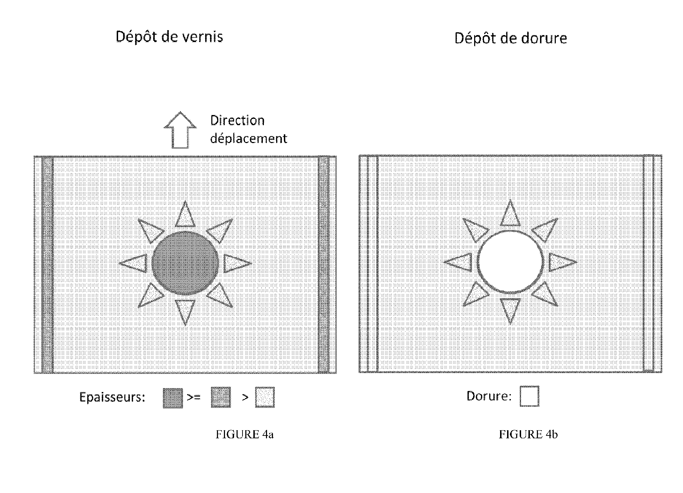

Selon une autre particularité, lorsque les zones en relief imprimées comprennent des zones destinées à être recouvertes d'une feuille de dorure ainsi que des zones qui ne le sont pas, l'épaisseur de la matière ajoutée à proximité des bords latéraux du substrat est calculée en fonction de la valeur de l'épaisseur respective du relief des différentes zones. Une illustration correspondante est représentée dans la figure 4.

Selon une autre particularité, l'épaisseur de la matière ajoutée à proximité des bords latéraux du substrat est calculée en fonction de la valeur de l'épaisseur de la feuille de dorure.

Selon une autre particularité, l'épaisseur de la matière ajoutée à proximité des bords latéraux du substrat est calculée en fonction de la valeur de l'épaisseur du relief des zones destinées à être recouvertes d'une feuille de dorure et de l'épaisseur de la feuille de dorure.

Selon une autre particularité, l'épaisseur de la matière ajoutée à proximité des bords latéraux du substrat est calculée en fonction de la valeur de l'épaisseur du relief des zones destinées à être recouvertes d'une feuille de dorure, de la valeur de l'épaisseur du relief des zones qui ne sont pas destinées à être recouvertes d'une feuille de dorure et de l'épaisseur de la feuille de dorure.

Enfin, selon une autre particularité, l'épaisseur de la matière ajoutée à proximité des bords latéraux du substrat est inférieure à la valeur de l'épaisseur minimale du relief des zones destinées à être recouvertes d'une feuille de dorure.

L'invention, avec ses caractéristiques et avantages, ressortira plus clairement à la lecture de la description ci-après, faite en référence aux dessins annexés, dans lesquels :

### DESCRIPTION FIGURES

La figure 1 illustre une technique de dorure selon certains modes de réalisation de la présente invention.
La figure 2 illustre l'ensemble du procédé selon certains modes de réalisation de la présente invention.
Les figures 3a, 3b, 4a et 4b illustrent une préparation de substrat et de dorure selon certains modes de réalisation de la présente invention.

### DESCRIPTION DES MODES DE REALISATION PREFERES DE L'INVENTION

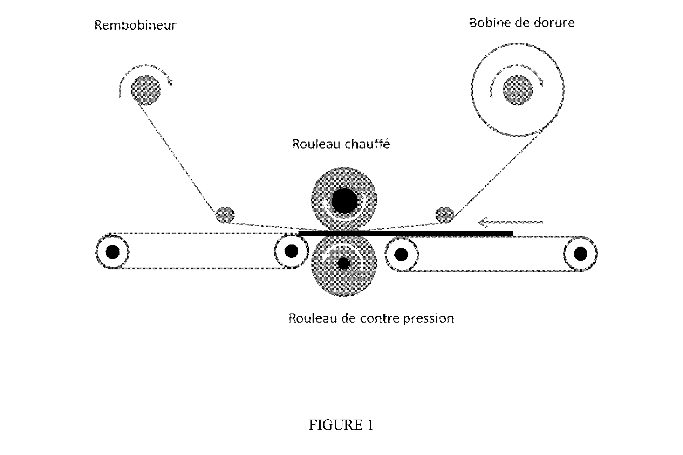

De manière illustrative et non limitative, la figure 1 illustre une technique de dorure qui comprend l'utilisation d'un rouleau chauffé et d'un rouleau de contre pression entre lesquels le substrat et la feuille de dorure sont mis en contact. Une bobine de dorure et le rembobineur y sont également représentés.

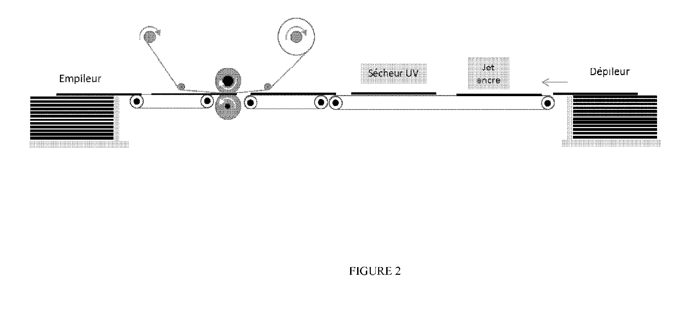

De manière illustrative et non limitative, la figure 2 illustre l'ensemble du procédé selon certains modes de réalisation de la présente invention. Pour les besoins d'illustration et de simplification, l'étape de préparation du substrat et l'étape d'impression y sont confondues car elles sont effectuées, dans certains modes de réalisation préférés de l'invention, au sein d'au moins un même moyen d'impression par jet d'encre. En amont de la personnalisation est représenté un dépileur de substrat tandis qu'un empileur de substrat est montré en aval. Une étape optionnelle, bien que préférée, de séchage (par exemple par UV) des encres/vernis y est également représentée comme intervenant avant l'étape de dorure.

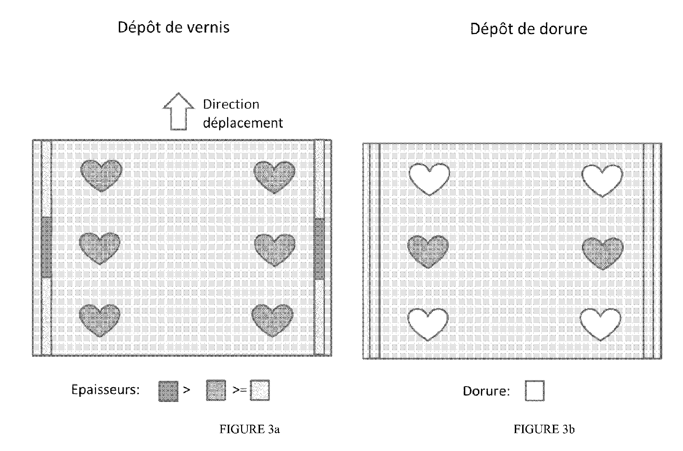

La figure 3a illustre, de manière illustrative et non limitative, un dépôt de matière effectué conformément à certains modes de réalisation de la présente invention. Dans cette illustration, la matière (par exemple un vernis) utilisée pour l'étape de préparation du substrat est identique à celle utilisée pour l'impression des reliefs destinés à recevoir le revêtement de dorure (également appelé ci-après recouvrement ou matière ou simplement « dorure »), mais ceci ne constitue pas une limitation de la présente invention. On peut y apercevoir sur les deux bords latéraux du substrat deux cordons de matière présentant une épaisseur variable ; dans le sens de déplacement du substrat, ces cordons ont respectivement une première épaisseur suivie d'une seconde épaisseur plus importante suivie d'une troisième épaisseur sensiblement identique à la première épaisseur. On peut également y apercevoir six zones imprimées en relief en forme de coeur.

De manière illustrative et non limitative, la figure 3b illustre le substrat de la figure 3a après étape de dorure. Cette figure met en évidence deux avantages essentiels de la présente invention, à savoir la non contamination du substrat par la dorure dans les zones qui ne sont pas en relief ainsi que la dorure sélective des zones en relief - dans cette illustration, les deux coeurs du milieu du substrat - grâce à l'épaisseur variable de la matière disposée de part et d'autre du substrat.

De manière illustrative et non limitative, la figure 4a illustre également un dépôt de matière effectué conformément à la présente invention. Dans cette illustration, la matière (par exemple un vernis) utilisée pour l'étape de préparation du substrat est identique à celle utilisée pour l'impression des reliefs destinés au recouvrement de dorure, mais ceci ne constitue pas une limitation de la présente invention. On peut y apercevoir sur les deux bords latéraux du substrat deux cordons de matière présentant une épaisseur sensiblement constante. On peut également y apercevoir un soleil imprimé en relief présentant un centre d'épaisseur supérieure à l'épaisseur de ses extrémités.

De manière illustrative et non limitative, la figure 4b illustre le substrat de la figure 4a après étape de dorure. Cette figure met également en évidence deux avantages essentiels de la présente invention, à savoir la non contamination du substrat par la dorure dans les zones qui ne sont pas en relief ainsi que la dorure sélective des zones en relief - dans cette illustration, le centre du soleil - grâce à la sélection d'une épaisseur particulière de la matière disposée de part et d'autre du substrat.

### Matière

Les exemples et/ou détails décrits dans la présente demande sont fournis de manière illustrative et non limitative. En particulier, les exemples concernant le type de matière utilisé dans le cadre de la présente invention pour l'étape de préparation du substrat ne doivent pas être interprété de manière limitative car un des avantages principaux, au moins au niveau physique/mécanique, est que cette matière empêche la contamination, par la dorure, des zones devant rester intactes tout en permettant que la dorure recouvre efficacement les zones imprimées en relief sur lesquelles on souhaite déposer la dorure. Il est toutefois évident que la présente invention procure de nombreux autres avantages en fonction des modes d'exécution sélectionnés tels que décrits dans la présente description.

Selon certains modes de réalisation de la présente invention, la dite matière est sélectionnée parmi les encres et/ou vernis, de préférence parmi les encres et/ou vernis adaptés au procédé d'impression par jet d'encre.

Selon certains modes de réalisation de la présente invention, la dite matière est sélectionnée parmi les encres et/ou vernis utilisés lors de l'étape d'impression du substrat par jet d'encre.

Ainsi, selon certains modes de réalisation de la présente invention, la préparation du substrat par ajout de matière est effectuée au moyen d'une impression par jet d'encre, par exemple en utilisant les mêmes moyens d'impression que ceux utilisés pour l'étape d'impression du substrat par jet d'encre.

Selon certains modes de réalisation de la présente invention, la dite matière est sélectionnée parmi au moins un groupe de substances dont la nature permet d'optimiser sa « non-compatibilité » avec la dorure. On notera que dans le cadre de la présente invention, le terme de « non-compatibilité » est d'une manière générale utilisé pour signifier que la feuille de dorure n'aura pas tendance à coller à la dite matière.

### Préparation du substrat (e.g. Étape additionnelle)

La préparation du substrat (parfois désignée par « étape additionnelle » ci-après) par ajout de matière à proximité des bords latéraux du substrat peut être effectuée avant l'impression, après l'impression ou de préférence en même temps que l'impression et avant ou pendant la personnalisation du substrat par dépôt de revêtement/dorure (en effet, la présente demande détaille un dépôt d'encre ou de vernis ou autre matière, préalable au dépôt de la dorure, mais il est possible d'envisager l'ajout de moyens de guidage non imprimés, bien qu'il soit préféré de tirer avantage de l'impression elle-même pour ne pas nécessiter de modifier la machine d'impression de manière onéreuse) . Le terme de « bords latéraux » est utilisé dans la présente demande, en particulier pour le substrat, en référence à la direction selon laquelle la dorure sera déposée. En effet, il est préférable que la préparation du substrat soit effectuée transversalement au dépôt de la dorure. De même, il est préférable que la préparation du substrat soit effectuée sur au moins une zone située à proximité des contours du substrat, mais il est possible d'envisager n'importe quelle disposition, en fonction du résultat souhaité.

Certains modes de réalisation de la présente invention reposent sur une préparation du substrat par l'addition de matière à proximité des bords latéraux du substrat.

On peut bien évidemment imaginer toute sorte de forme pour cette matière additionnelle. On citera à titre d'exemple non limitatif des points et/ou des lignes continues ou discontinues (que nous appellerons de manière générique « cordons » dans la présente description).

Selon certains modes de réalisation de la présente invention, les cordons sont positionnés à une distance inférieure à deux centimètres du bord latéral du substrat.

Selon certains modes de réalisation de la présente invention, les cordons sont positionnés sur le substrat lui-même.

Selon certains modes de réalisation de la présente invention, les cordons sont positionnés dans la zone dite « technique », également connue sous la dénomination de « zone de prise de pince » ou « zone réservée » du substrat. Il s'agit en général de la zone qui peut être saisie par les moyens de déplacement du substrat au travers du dispositif d'impression et/ou qui est généralement découpée après impression/dorure.

Selon certains modes de réalisation de la présente invention, les cordons sont placés à proximité des deux bords latéraux du dit substrat.

Selon certains modes de réalisation de la présente invention, lorsque les cordons placés à proximité des deux bords latéraux du substrat sont discontinus, ils occupent une zone dont l'étendue est adaptée en fonction du positionnement de la dorure sur les zones imprimées, comme par exemple au moins 1%, 5%, 10%, 25%, 50%, 75% ou même 90% de la longueur des bords latéraux. A titre d'exemple, si le substrat requiert, sur une partie de la longueur du substrat, une dorure le long de son bord latéral droit, on préférera ne pas mettre de cordon à proximité de cette zone.

Il n'y a pas de véritable limitation quant à la largeur des cordons selon la présente invention. Toutefois, pour éviter un gaspillage de matière et du substrat, on utilisera par exemple une largeur inférieure à 1 cm, 0.5 cm, 0.1 cm, 500 microns, ou même inférieure à 50 microns.

### Zones destinées à être munies d'un revêtement/d'une dorure

La présente invention comprend donc une étape de dorure par contact des zones du substrat qui présentent un relief suite à l'impression d'un motif avec au moins un dispositif de dorure (e.g., une feuille de dorure).

Il n'y a pas de véritable limitation selon la présente invention en ce qui concerne les zones destinées à être recouvertes d'une feuille de dorure. Toutefois, comme déjà explique ci-dessus, si des zones destinées à être recouvertes d'une feuille de dorure sont situées à proximité des bords latéraux du substrat, on préfèrera ne pas mettre de cordon à proximité de ces zones.

Les zones imprimées devant être recouvertes d'une feuille de dorure peuvent occuper n'importe quelle surface du substrat. La présente invention est de préférence utilisée lorsque la surface du substrat devant être recouverte par une dorure représente moins de 50% de la surface totale du substrat. Néanmoins, il est possible d'utiliser la présente invention au-delà de ces limites, notamment lorsque le dispositif de dépôt de dorure présente une souplesse trop importante pour garantir qu'il n'atteindra pas les zones qui n'étaient pas destinées à recevoir de la dorure. On notera d'ailleurs que la présente invention s'applique de préférence lorsque le dispositif de dépôt (voire de pressage) de dorure est rigide, même si l'invention permet justement qu'un dispositif plus souple soit utilisé (alors que les dispositifs ou systèmes de l'art antérieur ne permettent aucune de ces options).

Il n'y a pas de véritable limitation selon la présente invention en ce qui concerne la surface minimale du substrat devant être recouverte par la feuille de dorure. Toutefois, dans certains modes de réalisation, la présente invention sera préférentiellement utilisée lorsque la surface du substrat devant être recouverte par la dorure représente plus de 1% de la surface totale du substrat, par exemple plus de 5% ou même plus de 10% et/ou moins de 90%, par exemple moins de 50% et notamment de l'ordre de 10%.

### Substrat

Le substrat peut être sélectionné parmi un grand nombre de matière et ne pas être considéré comme limité aux matières fréquemment utilisés dans les dispositifs standards d'impression et/ou de personnalisation tels que les substrats papier, carton et plastique. On citera à titre d'exemples non limitatifs le métal, le papier, le tissu non-tissé, le plastique, par exemple une résine copolymère méthacrylique, du polyester, du polycarbonate, du polyéthylène, du polypropylène, du polystyrène et/ou du chlorure de polyvinyle, ou même les matériaux de type cellulosique tels que, par exemple, le bois, le contreplaqué, ou les matériaux cristallins tels que le verre ou les céramiques, par exemple. L'invention s'applique donc également à toute combinaison de ces matériaux, comme par exemple les matériaux complexes comprenant un ou plusieurs de ces composants comme par exemple les briques de lait.

Selon la présente invention, le substrat (feuille, carte, etc...) se présente généralement sous une forme rectangulaire ou carrée. Cette feuille se déplace, en général grâce à un système de transport de substrats dans une machine d'impression, le long d'un chemin de transport orienté selon un axe longitudinal depuis au moins un magasin d'entrée fournissant les substrats imprimables et/ou personnalisables, jusqu'à au moins un magasin de sortie recevant les substrats imprimés et/ou personnalisés. Les « bords latéraux » du substrat sont donc, comme expliqué ci-dessus, les deux bords situés de part et d'autre de cet axe longitudinal; les bords avant et/ou arrière sont ses bords transversaux.

### Revêtement/matière/Dorure

La présente invention concerne un procédé et/ou un système d'impression comprenant une dorure du substrat. Toute technique de dorure adaptée au procédé de la présente invention peut être utilisée. Toutefois, selon certains modes de réalisation préférés de la présente invention, on utilise la technique de dorure à froid aussi connue sous le nom de « cold foil transfer ».

Ainsi, selon certains modes de réalisation de la présente invention, une feuille de dorure (qui fait donc partie du dispositif de dorure) est pressée contre les zones du substrat imprimées nécessitant le dépôt de la dite dorure. Ce contact entre la feuille de dorure et le substrat est généralement effectué au moyen de deux rouleaux entre lesquels le substrat et la feuille de dorure sont mis en contact.

Afin d'assurer un détachement optimal de la pellicule de dorure et son adhésion aux zones du substrat imprimées, on utilisera de préférence une colle. Cette colle pourra être soit positionnée sur les zones imprimées (avant d'appliquer la dorure), soit faire partie intégrante de la feuille de dorure elle-même. Dans certains modes de réalisation adaptés à la présente invention, on utilise une feuille de dorure qui intègre une pellicule de colle (qui sera pressée contre les zones à dorer) et on applique au préalable une colle (la même ou différente) sur les zones imprimées (avant d'appliquer la dorure). Dans d'autres modes de réalisation de la présente invention, une encre et/ou un vernis utilisé(s) pour l'impression permettent de conférer déjà aux zones destinées à être recouvertes de dorure une propriété adhésive ; cette dernière option est particulièrement avantageuse car elle permet d'éviter de rajouter de la colle sur les zones à dorer et/ou d'utiliser des feuilles de dorure exempt de pellicule adhésive.

Enfin, selon certains modes de réalisation de, la technique de dorure peut également comprendre une étape d'activation (par exemple au moyen de rayons UV) permettant de réticuler l'encre et/ou le vernis et/ou la colle et ainsi améliorer l'adhésion entre la feuille de dorure et les zones en relief du substrat.

Il est évident pour l'homme du métier que les mots « dorure » et « dorer » utilisés dans la présente invention ne sont pas limités à l'utilisation de feuille d'or et que n'importe quel dispositif de « dorure » peut être employé. Ces termes couvrent bien entendu tous les types de feuilles décoratives (parfois également appelées feuilles métalliques) parmi lesquels on peut citer à titre d'exemples illustratifs et non limitatifs, l'aluminium, le chrome, l'or, l'argent, le cuivre ou même des sels de métaux optiquement actifs. En général, on utilise une feuille de dorure pressée contre le substrat à personnaliser, et la présente demande désigne donc par ce terme l'utilisation générale d'un dispositif de dorure.

Les feuilles de dorure utilisées dans le cadre de la présente invention sont généralement fournies sous la forme de rouleau de largeur sensiblement équivalente à la dimension transversale du substrat.

Les feuilles de dorure utilisées dans le cadre de la présente invention sont généralement constituées de plusieurs pellicules superposées. On citera à titre d'exemple non limitatif, non exhaustif dans l'ordre d'accroche au substrat à dorer :
- une pellicule d'adhésif. Cette pellicule peut comprendre tout type de résine et/ou de cire et/ou de charge et peut aussi transiter vers un état collant sous l'effet de traitement thermique. Elle peut avoir une épaisseur qui est généralement comprise entre 0.5 et 5 microns ; et/ou
- au moins une pellicule de dorure, et
- une pellicule de protection aussi appelée de laquage et/ou de couleur (qui peut aussi comprendre tout type de colorant et/ou pigment et/ou agent de matage ou brillant). Cette pellicule de protection peut être caractérisée par de nombreuses propriétés en fonction de l'utilisation recherchée, que ce soit des propriétés de résistance chimique et/ou physique ; et/ou
- une pellicule de décollement aussi appelée de libération (« release layer »). Cette pellicule est généralement très fine (d'une épaisseur habituellement inferieure a 0.1 micron) et elle peut être constituée à titre d'exemple à partir de résines et/ou de cires solubles dans des solvants ; et/ou
- une couche dite de transport qui permet le transport de la feuille de dorure. Cette couche a une épaisseur qui est généralement comprise entre 5 et 50 microns. Elle est généralement constituée de films de polyester.

### Impression de substrat en relief, notamment par jet d'encre

Le procédé d'impression selon la présente invention concerne généralement une impression de substrat par jet d'encre qui met en relief des zones destinées à être recouvertes d'une feuille de dorure. L'impression par jet d'encre est bien connue de l'homme de l'art.

Les zones peuvent être toutes sortes de formes, par exemple des points, des lettres et/ou toutes autres formes géométriques quelconques. Elles peuvent être constituées de différentes matières, par exemple d'encres et/ou de vernis. Elles peuvent également être recouvertes d'une couche de matière, par exemple recouvertes de colle, avant l'étape de dorure ; toutefois, selon certains modes de réalisation de la présente invention, l'étape de dorure s'effectue directement sur l'encre et/ou le vernis déposé par jet d'encre.

Le relief des dites zones destinées à être recouvertes d'une feuille de dorure représente de préférence une épaisseur de l'ordre du micron, de préférence supérieure à dix microns, ou même supérieure à 15 microns.

Enfin, l'épaisseur de la matière ajoutée à proximité des bords latéraux du substrat est généralement calculée en fonction de la valeur de l'épaisseur de la dorure.

Bien qu'il n'existe pas, en théorie, d'épaisseur maximale du relief pour les dites zone, on préférera en général limiter l'épaisseur des zones en relief à une valeur de 500 microns, de préférence inférieure à 300 microns, mais les techniques actuelles permettent tout de même d'atteindre des épaisseurs de l'ordre du millimètre, voire plusieurs millimètres et il est clair que la présente invention n'est pas limitée à ces exemples.

On comprend de ce qui précède que la présente invention concerne également au moins un dispositif (ou un système) d'impression et/ou de personnalisation comprenant des moyens de mise en oeuvre d'au moins un des procédés décrits dans la présente demande. Grâce aux considérations fonctionnelles fournies dans la présente demande, on comprend que de tels systèmes ou dispositifs comportent des moyens d'accomplir les fonctions décrites en référence au procédé et qu'il n'est pas nécessaire de détailler ces moyens.

La présente demande décrit diverses caractéristiques techniques et avantages en référence aux figures et/ou à divers modes de réalisation. L'homme de métier comprendra que les caractéristiques techniques d'un mode de réalisation donné peuvent en fait être combinées avec des caractéristiques d'un autre mode de réalisation à moins que l'inverse ne soit explicitement mentionné ou qu'il ne soit évident que ces caractéristiques sont incompatibles ou que la combinaison ne fournisse pas une solution à au moins un des problèmes techniques mentionnés dans la présente demande. De plus, les caractéristiques techniques décrites dans un mode de réalisation donné peuvent être isolées des autres caractéristiques de ce mode à moins que l'inverse ne soit explicitement mentionné.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Procédé d'impression comprenant une étape d'impression de substrat par jet d'encre qui met en relief des zones qui sont recouvertes d'une feuille de dorure par une étape consécutive de dorure par contact entre ces zones du substrat et une feuille de dorure, et une étape additionnelle qui est préalable à l'étape de dorure et qui consiste en une préparation du substrat **caractérisée par** l'addition de matière à proximité des bords latéraux du substrat.

2. Procédé selon la revendication précédente **caractérisé en ce que** l'épaisseur minimale de la matière ajoutée à proximité des bords latéraux du substrat est de l'ordre du micron, de préférence supérieure à dix microns, ou même supérieure à quinze microns.

3. Procédé selon l'une quelconque des revendications précédentes **caractérisé en ce que** l'épaisseur de la matière ajoutée à proximité des bords latéraux du substrat est fonction de la valeur de l'épaisseur du relief des zones destinées à être recouvertes d'une feuille de dorure.

4. Procédé selon l'une quelconque des revendications précédentes **caractérisé en ce que** l'épaisseur de la matière ajoutée à proximité des bords latéraux du substrat est fonction de la valeur de l'épaisseur du relief des zones qui ne sont pas destinées à être recouvertes d'une feuille de dorure.

5. Procédé selon l'une quelconque des revendications précédentes **caractérisé en ce que** l'épaisseur de la matière ajoutée à proximité des bords latéraux du substrat est calculée en fonction de la valeur de l'épaisseur de la feuille de dorure.

6. Procédé selon l'une quelconque des revendications précédentes **caractérisé en ce que** la matière ajoutée à proximité des bords latéraux du substrat est sélectionnée parmi les encres et/ou vernis, de préférence parmi les encres et/ou vernis adaptés au procédé d'impression par jet d'encre.

7. Procédé selon la revendication précédente **caractérisé en ce que** la dite matière est sélectionnée parmi les encres et/ou vernis utilisés lors de l'étape d'impression du substrat par jet d'encre.

8. Procédé selon l'une quelconque des revendications précédentes **caractérisé en ce que** l'étape additionnelle de préparation du substrat par ajout de matière à proximité des bords latéraux du substrat est effectuée au moyen d'une impression par jet d'encre, de préférence en utilisant les mêmes moyens d'impression que ceux utilisés pour l'étape d'impression du substrat par jet d'encre.

9. Procédé selon l'une quelconque des revendications précédentes **caractérisé en ce que** l'étape additionnelle de préparation du substrat par ajout de matière à proximité des bords latéraux du substrat est effectuée sous la forme de cordons.

10. Procédé selon l'une quelconque des revendications précédentes **caractérisé en ce que** l'étape additionnelle de préparation du substrat par ajout de matière à proximité des bords latéraux du substrat est effectuée dans la zone technique, zone de prise de pince ou zone réservée du substrat.

11. Procédé selon l'une quelconque des revendications précédentes **caractérisé en ce que** le substrat est sélectionné parmi les papiers, cartons et plastiques, ou parmi les matériaux complexes comprenant un ou plusieurs de ces composants.
